# EUROPÄISCHE PATENTSCHRIFT

(11) **EP 1 070 653 B1**
(45) Veröffentlichungstag und Bekanntmachung des Hinweises auf die Patenterteilung: **23.07.2003**
(21) Anmeldenummer: 00110596.4
(22) Anmeldetag: 18.05.2000
(51) Int. Cl.: B62D 1/187, B62D 1/19

(54) **Lenkungsanordnung für ein Kraftfahrzeug**
Steering system of a motor vehicle
Système de direction d'un véhicule automobile

(30) Priorität: 17.07.1999 DE 19933676
(43) Veröffentlichungstag der Anmeldung: 24.01.2001
(73) Patentinhaber: DaimlerChrysler AG, 70567 Stuttgart (DE)
(72) Erfinder: Kieserling, Joachim, 71394 Kernen (DE); Orbach, Gregor, 71088 Holzgerlingen (DE); Schremmer, Gottfried, 71732 Tamm (DE)

(56) Entgegenhaltungen:
- EP-A- 0 800 978
- DE-A- 3 923 982
- DE-A- 19 512 809

## Beschreibung

Die Erfindung betrifft eine Lenkungsanordnung für ein Kraftfahrzeug mit einem Mantelrohr, das in einem lenkradseitigen Bereich für eine Höhenverstellung des Lenkrades mittels einer Stelleinrichtung relativ zu einer fahrzeugfesten Konsole höhenverstellbar angeordnet ist, und das in einem lenkgetriebeseitigen Bereich mittels einer Ausgleichslagerung schwenkbeweglich an der fahrzeugfesten Konsole gelagert ist.

Eine solche Lenkungsanordnung für ein Kraftfahrzeug ist aus der DE 195 12 809 A1 bekannt. Um eine Höhenverstellung eines Lenkrades der Lenkungsanordnung zu erzielen, ist ein Mantelrohr der Lenkungsanordnung in einem lenkradseitigen und damit - auf die normale Fahrtrichtung bezogen - hinteren Bereich mittels einer manuellen Stelleinrichtung höhenverlagerbar gehalten. Frontseitig und damit zu einem Lenkgetriebe der Lenkungsanordnung hin gewandt ist das Mantelrohr mittels einer Ausgleichslagerung an einer fahrzeugfesten Konsole gehalten. Die Ausgleichslagerung weist einen das Mantelrohr umgreifenden Ring auf, der radial gesehen elastisch nachgiebig gestaltet ist und innerhalb eines fahrzeugfest verschraubten Ringflansches positioniert ist. Dieser frontseitige Bereich bildet die Schwenklagerung des Mantelrohres, um mittels der rückseitigen Stelleinrichtung die Höhenverstellung des Mantelrohres erzielen zu können.

Aufgabe der Erfindung ist es, eine Lenkungsanordnung der eingangs genannten Art zu schaffen, die mit einfachen Mitteln sowohl eine Höhenverstellung als auch eine Längsverstellung eines Lenkrades der Lenkungsanordnung ermöglicht.

Diese Aufgabe wird bei einer gattungsgemäßen Lenkungsanordnung dadurch gelöst, daß das Mantelrohr mittels der Stelleinrichtung zusätzlich längsverstellbar gehalten ist, und daß die Ausgleichslagerung durch einen einzelnen, exzentrisch am Mantelrohr angreifenden Aufhängepunkt gebildet ist, der die Schwenkachse für die Höhenverstellung des Mantelrohres definiert, und der in Längsrichtung des Mantelrohres einen Freiheitsgrad für eine Verschiebbarkeit des Mantelrohres aufweist. Dadurch wird in einfacher Weise zusätzlich zu einer Höhenverstellbarkeit des Lenkrades auch eine Längsverstellbarkeit erzielt. Die Ausgleichslagerung ist äußerst einfach und kompakt aufgebaut. Durch die exzentrische Anordnung lediglich eines einzelnen Aufhängepunktes, der sich oberhalb einer am Mantelrohr gelagerten Lenkspindel befindet, wird eine äußerst einfache und lediglich einen geringen Bauraum benötigende Halterung des Mantelrohres erzielt. Die Längsbeweglichkeit des Mantelrohres im Bereich des Aufhängepunktes mittels der Freiheitsgrade ist vorzugsweise auf die durch die Stellvorrichtung vorgegebene Längsbeweglichkeit des Mantelrohres abgestimmt.

In Ausgestaltung der Erfindung weist das Mantelrohr einen exzentrisch nach außen versetzten Profilabschnitt auf, der mit einem in Längsrichtung des Mantelrohres ausgerichteten Längsschlitz versehen ist, und der Längsschlitz ist von einem radial zu einer Längsachse des Mantelrohres ausgerichteten, als Aufhängepunkt dienenden Lagerzapfen durchsetzt, der sich mit einem Kopfbereich innenseitig an dem Profilabschnitt abstützt und der unter Federspannung an der fahrzeugfesten Konsole gehalten ist. Die durch Federkraft vorgespannte Positionierung des Lagerzapfens ermöglicht eine spielfreie Lagerung des Mantelrohres unabhängig von der jeweils eingestellten Schwenkposition. Durch die Integration des Aufhängepunktes in einen mit dem Mantelrohr einstückigen Profilabschnitt wird ein äußerst robuster Aufbau erzielt.

In weiterer Ausgestaltung der Erfindung ist der Profilabschnitt auf gegenüberliegenden Seiten des Längsschlitzes durch seitliche Stützabschnitte der fahrzeugfesten Konsole in Fahrzeugquerrichtung spielfrei abgestützt. Durch die seitliche Abstützung wird eine erhöhte Seitenstabilität erzielt, wodurch Seitenkräfte auf den Lagerzapfen vermieden werden.

In weiterer Ausgestaltung der Erfindung sind die Stützabschnitte der Konsole relativ zum Profilabschnitt des Mantelrohres ballig gestaltet. Diese runden Konturen der an dem Profilabschnitt des Mantelrohres außen- und innenseitig anliegenden Stützabschnitte gewährleisten bei entsprechenden Verstellbewegungen eine spielfreie Kinematik.

In weiterer Ausgestaltung der Erfindung weist die fahrzeugfeste Konsole zur Aufnahme des Lagerzapfens einen Hohlkammerabschnitt auf, in dem die Federanordnung zur spielfreien Stützung des Lagerzapfens positioniert ist. Dadurch wird ein sicherer Schutz des Aufhängepunktes gegen Belastungen von außen erzielt. Zudem sind vorteilhaft mit dem Hohlkammerabschnitt die Stützabschnitte verbunden.

In weiterer Ausgestaltung der Erfindung sind die miteinander im Bereich des Aufhängepunktes in Berührung gelangenden mantelrohrund konsolenseitigen Abschnitte gleitbeschichtet. Dadurch wird die Reibung zwischen den entsprechenden Abschnitten reduziert. Vorteilhaft sind Teflonbeschichtungen vorgesehen.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt schematisch in einer Seitenansicht eine Ausführungsform einer erfindungsgemäßen Lenkungsanordnung,
- Fig. 2: in vergrößerter schematischer Darstellung einen vorderen Aufhängepunkt eines Mantelrohres der Lenkungsanordnung nach Fig. 1,
- Fig. 3: in einem Querschnitt eine detailliert dargestellte Ausführungsform einer erfindungsgemäßen Lenkungsanordnung nach Fig. 1 entlang der Schnittlinie III-III in Fig. 1, und
- Fig. 4: in vergrößerter dreidimensionaler Darstellung die Lenkungsanordnung nach Fig. 3 im Bereich des Aufhängepunktes nach Fig. 3.

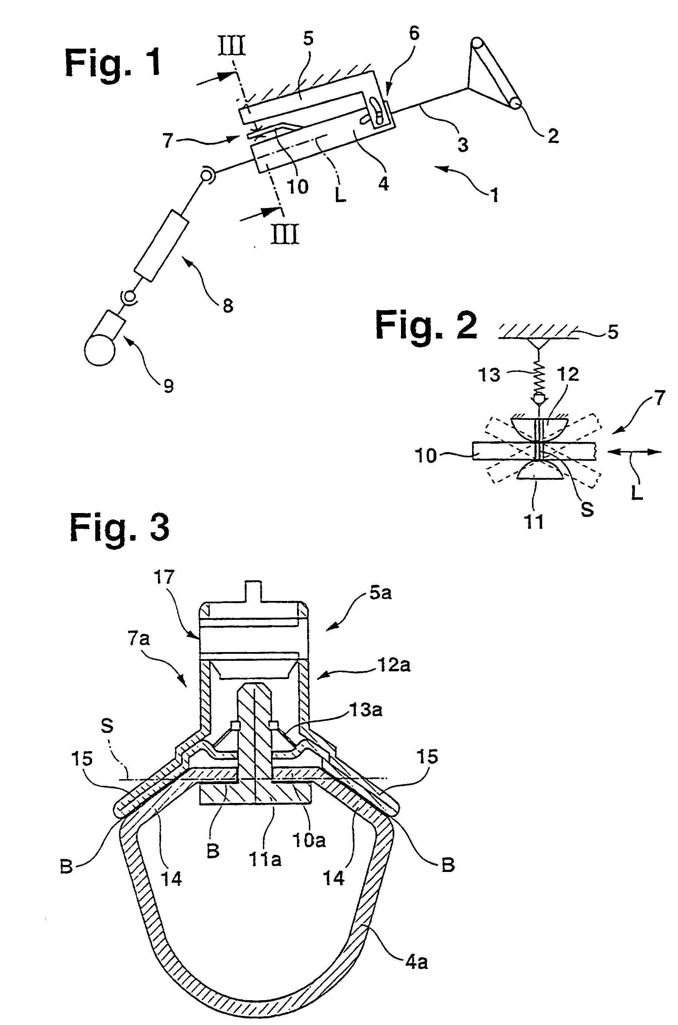

Eine Lenkungsanlage 1 für einen Personenkraftwagen nach den Fig. 1 und 2 weist in grundsätzlich bekannter Weise ein in einem Fahrzeuginnenraum des Kraftfahrzeuges befindliches Lenkrad 2 auf, das an einem stirnseitigen Ende einer Lenkspindel 3 gehalten ist. Die Lenkspindel 3 ist drehbeweglich in einem Mantelrohr 4 gelagert, das an einer fahrzeugfesten Konsole 5 gehalten ist. Die fahrzeugfeste Konsole 5 ist mit entsprechenden Teilen einer Karosserietragstruktur im Bereich einer Armaturentafel des Kraftfahrzeuges verbunden.

Die obere Lenkspindel 3 ist über ein Kreuzgelenk mit einer unteren Lenkspindel 8 verbunden, die wiederum mit einem Lenkgetriebe 9 gekoppelt ist.

Das Mantelrohr 4 ist mittels einer Stelleinrichtung 6, die manuell bedienbar ist, sowohl entlang seiner Längsachse L längenverstellbar als auch etwa rechtwinklig zur Längsachse L jeweils zur fahrzeugfesten Konsole 5 höhenverstellbar. Dadurch ist es möglich, die Position des Lenkrades 2 in seiner Höhe als auch in seiner Tiefe relativ zur Armaturentafel individuell auf den jeweiligen Fahrer einzustellen. Rückseitig und damit in einem lenkradseitigen Bereich ist das Mantelrohr 4 mittels der Stelleinrichtung 6 an der fahrzeugfesten Konsole 5 gehalten. Frontseitig und damit in einem vorderen, lenkgetriebeseitigen Bereich des Mantelrohres 4 ist das Mantelrohr 4 mittels eines einzelnen Aufhängepunktes 7 zum einen um eine in Fahrzeugquerrichtung horizontal verlaufende Schwenkachse S (Fig. 3) relativ zur fahrzeugfesten Konsole 5 schwenkbeweglich gelagert. Durch diese schwenkbewegliche Lagerung wird die Höhenverstellbarkeit des Mantelrohres 4 im Bereich der Stelleinrichtung 6 erzielt. Zum anderen ist der Aufhängepunkt 7 derart gestaltet, daß Längsverschiebungen entlang der Längsachse L des Mantelrohres 4 möglich sind, ohne daß das Mantelrohr 4 die sichere Positionierung am Aufhängepunkt 7 verläßt. Der Aufhängepunkt 7 greift an einem exzentrisch zur Längsachse L des Mantelrohres 4 angeordneten Profilabschnitt 10 des Mantelrohres 4 an. Der Profilabschnitt 10 ist oberhalb der Lenkspindel 3 als entsprechender Fortsatz des Mantelrohres 4 und damit näher zur fahrzeugfesten Konsole 5 hin versetzt positioniert.

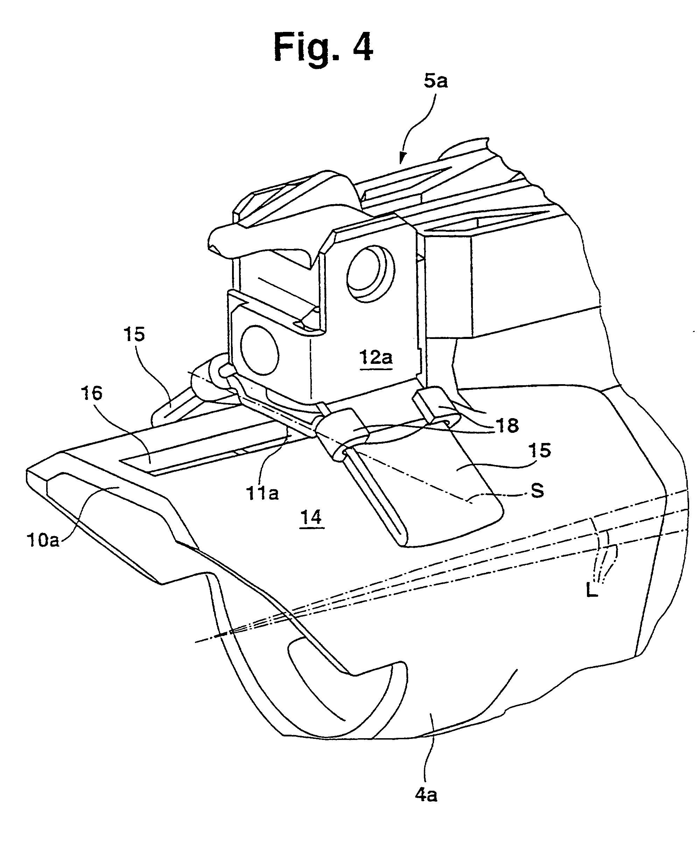

In den Profilabschnitt 10 verläuft in nicht näher dargestellter Weise analog dem Ausführungsbeispiel nach den Fig. 3 und 4 ein Längsschlitz parallel zur Längsachse L, durch den ein Lagerzapfen 11 als Teil des Aufhängepunktes 7 hindurchragt. Der Lagerzapfen 11 weist innenseitig des Profilabschnittes 10 und damit auf der der Lenkspindel 3 zugewandten Seite des Profilabschnittes 10 einen nicht näher bezeichneten Kopfbereich auf, der sich an der Innenseite des Profilabschnittes 10 abstützt. Auf der gegenüberliegenden Außenseite des Profilabschnittes 10 ist der Lagerzapfen mit einer Federanordnung 13 verbunden, die an der fahrzeugfesten Konsole 5 aufgehängt bzw. abgestützt ist. Die Federanordnung 13 übt auf den Lagerzapfen 11 eine - auf die Längsachse L bezogen - radial nach außen wirkende Zugkraft aus, wodurch der Kopfbereich des Lagerzapfens 11 gegen die Innenseite des Profilabschnittes 10 gedrückt wird. Zusätzlich weist die fahrzeugfeste Konsole 5 als Gegenlager Stützabschnitte 12 auf, die die Außenseite des Profilabschnittes 10 gegen die durch den Lagerzapfen 11 bewirkte Zugkraft abstützen, so daß der Profilabschnitt 10 des Mantelrohres 4 spielfrei zwischen dem Kopfbereich des Lagerzapfens 11 und den Stützabschnitten 12 der fahrzeugfesten Konsole 5 gehalten ist.

Sowohl der Kopfbereich des Lagerzapfens 11 als auch die korrespondierenden Stützabschnitte 12 der fahrzeugfesten Konsole 5 sind relativ zur Schwenkachse S ballig gestaltet, um eine kinematisch einwandfreie, spielfreie Verschwenkung des Profilabschnittes 10 und damit des Mantelrohres 4 im Bereich des Aufhängepunktes 7 (gestrichelte Darstellungen) zu erzielen. Ein Kreisbogen einer für die Höhenverstellung zuständigen Kulissenführung der fahrzeugfesten Konole 5 im Bereich der Stelleinrichtung 6 ist koaxial zur Schwenkachse S ausgerichtet.

Die in den Fig. 3 und 4 dargestellte praktische Ausführung der Lenkungsanordnung 1 nach den Fig. 1 und 2 entspricht dem zuvor beschriebenen Funktionsprinzip der Lenkungsanordnung 1 nach den Fig. 1 und 2, wobei funktionsgleiche Bauteile oder Abschnitte mit den gleichen Bezugszeichen unter Hinzufügung des Buchstabens a versehen sind. Das Mantelrohr 4a weist einen im oberen Bereich polygonalen Querschnitt auf, wobei zum einen der horizontale und den Längsschlitz 16 aufweisende Profilabschnitt im Bereich des Aufhängepunktes 7 gebildet wird. Zum anderen wird der Profilabschnitt 10a des Mantelrohres 4a durch schräg abfallende Seitenflanken 14 begrenzt, die als jeweils winklig ansetzende, ebene Profilabschnitte gestaltet sind. Die fahrzeugfeste Konsole 5a weist zwei korrespondierende, dachartige Stützabschnitte 15 auf, die an den Seitenflanken 14 außenseitig anliegen. Außerdem weist die Konsole 5a im Bereich des Aufhängepunktes 7 ein mit einem zentralen Hohlkammerabschnitt versehenes Gleitstück 12a auf, an dem die dachartigen Stützabschnitte 15 einstückig angeformt sind. Das Gleitstück 12a ist über eine Querbohrung 17 mittels einer entsprechenden Schraubbolzenverbindung lösbar an der fahrzeugfesten Konsole befestigt. Der Lagerzapfen 11a weist einen die Innenseite des Mantelrohres 4a und des Profilabschnittes 10a stützenden Kopfbereich auf, der analog der Darstellung nach Fig. 2 relativ zur Schwenkachse S ballig gestaltet ist. Innerhalb des Gleitstückes 12a wird der Lagerzapfen 11a durch eine als Federanordnung dienende Tellerfeder 13a federbelastet, die sich an einem Boden des Gleitstückes 12a abstützt. Bei einer nicht dargestellten Ausführungsform ist anstelle einer Tellerfeder ein Gummiklotz oder -bolzen vorgesehen, der die federelastische Abstützung des Lagerzapfens übernimmt. Neben dem Kopfbereich des Lagerzapfens 11a sind auch die Unterseiten der dachartigen Stützabschnitte 15 ballig gestaltet, wie anhand der Fig. 4 erkennbar ist. Die Funktion entspricht der Funktion der Stützabschnitte 12 nach Fig. 2. Das Mantelrohr 4a ist somit um die Schwenkachse S derart verschwenkbar, daß die Längsachse L gemäß Fig. 4 (strichpunktierte Darstellung) unterschiedliche Stellungen relativ zur fahrzeugfesten Konsole 5a einnehmen kann. Der Längsschlitz 16 gewährleistet die Längsverschiebbarkeit des Mantelrohres 4a. Um aufgrund der permanenten, spielfreien Anlage des Lagerzapfens 11a und der Stützabschnitte 15 am Mantelrohr 4a dennoch eine reibungsarme Längsverschiebbarkeit des Mantelrohres 4a zu gewährleisten, sind die Unterseiten der Stützabschnitte 15 wie auch die Oberseite des Kopfbereiches des Lagerzapfens 11a gleitbeschichtet, vorzugsweise teflonbeschichtet. Die Gleitbeschichtungszonen sind mit dem Bezugszeichen B versehen.

Wie anhand der Fig. 3 und 4 erkennbar ist, ist das Gleitstück 12a im Bereich der Stützabschnitte 15 als Blechbiegekonstruktion gestaltet. Im Bereich der Stützabschnitte 15 sind die die Stützabschnitte 15 bildenden Blechlaschen doppelt gelegt. Dabei ist eine einstückige Blechlasche entsprechend umgekantet, so daß sich insgesamt ein reiterartiger Querschnitt ergibt (Fig. 3). Die gewählte Blechbiegekonstruktion gewährleistet im Crashfall eine Fangfunktion für das Mantelrohr 4a, indem eine entsprechende Crashbelastung gemäß Fig. 3 auf das Mantelrohr 4a nach unten über den Lagerzapfen 11a den Boden des Gleitstückes 12a mitnimmt, wodurch die Laschenbereiche der Stützabschnitte 15 nach unten aufgebogen werden. Durch die plastische Deformation der Stützabschnitte 15 und die Auffaltung der Laschenbereiche der Stützabschnitte 15 erfolgt eine Energieabsorption, wobei die gesamte Blechbiegekonstruktion des Gleitstückes 12a sich nach unten längt. Durch die Längung bleibt das Mantelrohr 4a im Bereich dieses Aufhängepunktes gefangen. Gleichzeitig wurde jedoch Aufprallenergie durch die Deformation der Stützabschnitte 15 und des Bodens des Gleitstückes 12a vernichtet. Wie aus Fig. 4 erkennbar ist, sind die durch Biegung und Umkantung doppelt gelegten Laschenbereiche der Stützabschnitte 15 zusätzlich noch durch entsprechend außen übergreifende Biegelaschen 18 gesichert, um zu verhindern, daß bereits geringere Kräfte in Fahrzeughochrichtung eine Aufweitung der Stützabschnitte 15 bewirken. Durch diese zur Sicherung dienenden Biegelaschen 18 wird gewährleitet, daß erst bei Belastungsniveaus, die entsprechenden Crashbelastungen entsprechen, die gewünschte Aufweitung und Längung des Gleitstückes 12a nach unten erfolgt.

## Patentansprüche

1. Lenkungsanordnung für ein Kraftfahrzeug mit einem Mantelrohr (4; 4a), das in einem lenkradseitigen Bereich für eine Höhenverstellung des Lenkrades (2) mittels einer Stelleinrichtung (6) relativ zu einer fahrzeugfesten Konsole (5; 5a) höhenverstellbar angeordnet ist, und das in einem lenkgetriebeseitigen Bereich mittels einer Ausgleichslagerung (7; 7a) schwenkbeweglich an der fahrzeugfesten Konsole (5; 5a) gelagert ist,
**dadurch gekennzeichnet,**
**daß** das Mantelrohr (4; 4a) mittels der Stelleinrichtung (6) zusätzlich längsverstellbar gehalten ist, und daß die Ausgleichslagerung durch einen einzelnen, exzentrisch am Mantelrohr (4, 4a) angreifenden Aufhängepunkt (7; 7a) gebildet ist, der die Schwenkachse (S) für die Höhenverstellung des Mantelrohres (4; 4a) definiert, und der in Längsrichtung (L) des Mantelrohres (4; 4a) einen Freiheitsgrad für eine Verschiebbarkeit des Mantelrohres (4; 4a) aufweist.

2. Lenkungsanordnung nach Anspruch 1,
**dadurch gekennzeichnet,**
**daß** das Mantelrohr (4, 4a) einen exzentrisch nach außen versetzten Profilabschnitt (10, 10a) aufweist, der mit einem in Längsrichtung des Mantelrohres (4, 4a) ausgerichteten Längsschlitz (16) versehen ist, und daß der Längsschlitz (16) von einem radial zu einer Längsachse (L) des Mantelrohres (4, 4a) ausgerichteten, als Aufhängepunkt dienenden Lagerzapfen (11, 11a) durchsetzt ist, der sich mit einem Kopfbereich innenseitig an dem Profilabschnitt (10, 10a) abstützt und der unter Federspannung an der fahrzeugfesten Konsole (5, 5a) gehalten ist.

3. Lenkungsanordnung nach Anspruch 2,
**dadurch gekennzeichnet,**
**daß** der Profilabschnitt (10, 10a) auf gegenüberliegenden Seiten des Längsschlitzes (16) durch seitliche Stützabschnitte (15) der fahrzeugfesten Konsole (5a) in Fahrzeugrichtung spielfrei abgestützt ist.

4. Lenkungsanordnung nach Anspruch 3,
**dadurch gekennzeichnet,**
**daß** die Stützabschnitte (15) dachartig gestaltet sind und zwei korrespondierend schräg abfallende Seitenflanken (14) des Profilabschnittes (10, 10a) übergreifen.

5. Lenkungsanordnung nach Anspruch 3,
**dadurch gekennzeichnet,**
**daß** die Stützabschnitte (15) der Konsole (5a) und der Kopfbereich des Lagerzapfens (11a) relativ zum Profilabschnitt (10a) des Mantelrohres (4a) ballig gestaltet sind.

6. Lenkungsanordnung nach Anspruch 3 oder 4,
**dadurch gekennzeichnet,**
**daß** die Stützabschnitte (15) Teil eines Gegenstückes (12a) sind, das an der Konsole lösbar festgelegt ist.

7. Lenkungsanordnung nach Anspruch 6,
**dadurch gekennzeichnet,**
**daß** das Gegenstück (12a) als Blechbiegekonstruktion derart gestaltet ist, daß eine plastisch deformierte Nachgiebigkeit in Fahrzeughochrichtung nach unten vorhanden ist.

8. Lenkungsanordnung nach Anspruch 2,
**dadurch gekennzeichnet,**
**daß** das Gegenstück (12a) der Konsole (5a) zur Aufnahme des Lagerzapfens (11a) einen Hohlkammerabschnitt (12a) aufweist, in dem die Federanordnung (13a) zur spielfreien Stützung des Lagerzapfens (11a) positioniert ist.

9. Lenkungsanordnung nach Anspruch 1,
**dadurch gekennzeichnet,**
**daß** die miteinander im Bereich des Aufhängepunktes (7) in Berührung gelangenden mantelrohr- und konsolenseitigen Abschnitte (11, 12; 11a, 15) gleitbeschichtet sind.

## Claims

1. Steering arrangement for a vehicle with a tubular casing (4; 4a) that is disposed, such that its height can be adjusted in relation to the bracket pin (5; 5a) having a fixed position in a vehicle, in an area on the steering wheel (2) side for a height-adjustment, by means of an adjustment device (6), of the steering wheel (2) and that is supported, in an area on the steering mechanism side, by means of an equalizing bearing (7; 7a), able to swivel on the bracket pin (5; 5a) that is fixed to the vehicle,
**characterized in that**
the tubular casing (4; 4a) is additionally held such that it can be displaced, in a longitudinal direction, by means of the adjustment device (6), and that the equalizing bearing is formed by a single, eccentric mounting point (7; 7a) that engages on the tubular casing (4; 4a), the said mounting point defining the swivelling axis (S) for height adjustment of the tubular casing (4; 4a) and having, in the longitudinal direction (L) of the tubular casing (4; 4a), a degree of freedom for movability of the tubular casing (4; 4a).

2. Steering arrangement in accordance with claim 1,
**characterized in that**
tubular casing (4, 4a) has an eccentric sectional form element (10, 10a) that is offset outwards, the said sectional form element being provided with a longitudinal slot (16) aligned in the longitudinal direction of the tubular casing (4, 4a), and **in that** a journal pin (11, 11a), serving as a mounting point, and aligned with the longitudinal axis (L) of the tubular casing (4, 4a), passes through the longitudinal slot (16), being supported with a head-area, on an inner side, on the sectional form element (10, 10a) and being held under spring loading on the bracket pin (5, 5a) that is firmly fixed to the vehicle.

3. Steering arrangement in accordance with claim 2,
**characterized in that**
the sectional form element (10, 10a) is supported without play, in the direction of the vehicle, on opposite sides of the longitudinal slot (16) by lateral support sections (15) of the bracket pin (5a) that is firmly fixed to the vehicle.

4. Steering arrangement in accordance with claim 3,
**characterized in that**
the support sections (15) have a roof-like form and overlap two correspondingly inclined, falling flanks (14) of the sectional form element (10, 10a).

5. Steering arrangement in accordance with claim 3,
**characterized in that**
the support sections (15), the bracket pin (5a) and the head area (11a) of the journal pin is designed crowned relative to the sectional form element (10a) of the tubular casing (4a).

6. Steering arrangement in accordance with claim 3 or 4,
**characterized in that**
the support sections (15) are part of a counterpart (12a) that is detachably set on the bracket pin.

7. Steering arrangement in accordance with claim 6,
**characterized in that**
the counterpart (12a) is formed as a sheet-bending structure such that there is downward plastic, yielding, deformation in the vertical direction of the vehicle.

8. Steering arrangement in accordance with claim 2,
**characterized in that**
the counterpart (12a) of the bracket pin (5a) for taking up the journal pin (11a) has a cavity section (12a) in which the spring arrangement (13a) is positioned for support, free of play, of the journal pin (11a).

9. Steering arrangement in accordance with claim 1,
**characterized in that**
the tubular casing and bracket pin-side sections (11, 12; 11a, 15), that come into contact with each other in the area of the mounting point (7), are coated such that they slide.

## Revendications

1. Dispositif de direction pour un véhicule automobile avec un tube de protection (4 ; 4a) disposé, au niveau d'une zone du côté du volant, de manière ajustable en hauteur, pour un réglage en hauteur du volant (2) par rapport à une console fixé au véhicule (5 ; 5a) à l'aide d'un dispositif de réglage (6) et logé au niveau d'une zone du côté des organes de direction de manière pivotante sur la console fixée au véhicule, à l'aide d'un logement d'équilibrage (7 ; 7a), **caractérisé en ce que** le tube de protection (4 ; 4a) est, en outre, maintenu de manière réglable longitudinalement à l'aide du dispositif de réglage (6) et **en ce que** le logement d'équilibrage est constitué d'un seul point de suspension (7 ; 7a), disposé de manière excentrée sur le tube de protection (4 ; 4a), et qui définit l'axe de pivotement (S) du réglage en hauteur du tube de protection (4 ; 4a) et qui possède un degré de liberté dans la direction longitudinale (L) du tube de protection (4 ; 4a) afin de pouvoir déplacer le tube de protection (4 ; 4a).

2. Dispositif de direction selon la revendication 1, **caractérisé en ce que** le tube de protection (4 ; 4a) comporte une partie profilée (10 ; 10a) décalée vers l'extérieur et munie d'une fente longitudinale (16) orientée longitudinalement par rapport au tube de protection (4 ; 4a), et **en ce que** la fente longitudinale (16) est traversée par un tourillon (11 ; 11a) qui est orienté radialement par rapport à un axe longitudinal du tube de protection (4 ; 4a), qui sert de point de suspension, qui est appuyé contre une zone de tête à l'intérieur de la partie profilée (10 ; 10a) et qui est maintenue grâce à une contrainte élastique sur la console (5 ; 5a).

3. Dispositif selon la revendication 2, **caractérisé en ce que** la partie profilée (10 ; 10a) est appuyée sans jeu sur les côtés opposés de la fente longitudinale (16) grâce à des parties latérales d'appui (15) de la console (5a) fixée au véhicule dans le sens de marche du véhicule.

4. Dispositif de direction selon la revendication 3, **caractérisé en ce que** les parties d'appui (15) ont la forme d'un toit et s'emboîtent sur deux flancs latéraux (14) de la partie profilée (10, 10a) tombant en diagonale.

5. Dispositif de direction selon la revendication 3, **caractérisé en ce que** les parties d'appui (15) de la console (5a) et la zone de tête du tourillon (11a) ont une forme bombée correspondant à la partie profilée (10a) du tube de protection (4a).

6. Dispositif de direction selon la revendication 3 ou 4, **caractérisé en ce que** les parties d'appui (15) font partie d'une contre-pièce (12a) fixée de manière amovible sur la console.

7. Dispositif de direction selon la revendication 6, **caractérisé en ce que** la contre-pièce (12a) est conçu comme une tôle pliée de telle sorte qu'elle possède une élasticité dans la direction verticale du véhicule vers le bas.

8. Dispositif de direction selon la revendication 2, **caractérisé en ce que** la contre-pièce (12a) de la console (5a) comporte, pour le logement du tourillon (11a), une partie creuse (12a) dans laquelle se trouve le dispositif à ressort (13a) pour l'appui sans jeu du tourillon (11a).

9. Dispositif de direction selon la revendication 1, **caractérisé en ce que** les parties en contact les unes avec les autres du côté du tube de protection et du côté de la console (11, 12 ; 11a, 15) sont munis d'un revêtement glissant.
